# EUROPEAN PATENT SPECIFICATION

(11) **EP 3 583 076 B1**
(45) Date of publication and mention of the grant of the patent: **29.06.2022**
(21) Application number: 18706007.4
(22) Date of filing: 14.02.2018
(51) Int. Cl.: C02F 3/34, E03D 9/03, C02F 103/30

(54) **ENZYMATIC PURIFICATION OF TOILET WATER**
ENZYMATISCHE REINIGUNG VON TOILETTENWASSER
PURIFICATION ENZYMATIQUE DE L'EAU DES TOILETTES

(30) Priority: 15.02.2017 SE 1750141
(43) Date of publication of application: 25.12.2019
(73) Proprietor: Pharem Biotech AB, 754 30 Uppsala (SE)
(72) Inventor: RYEN, Martin, 754 30 Uppsala (SE)
(74) Representative: Zacco Sweden AB
(86) International application number: PCT/SE2018/050139
(87) International publication number: WO 2018/151650

(56) References cited:
- DE-A1-102009 003 088
- JP-A- 2002 028 692
- US-A- 5 543 309
- US-A1- 2016 010 065
- US-B1- 6 325 934
- Ulla Karlsson-Ottoson: "Läkemedel renas bort redan i toaletten", , 9 June 2016 (2016-06-09), XP055711727, Retrieved from the Internet: URL:https://www.nyteknik.se/startup/lakeme del-renas-bort-redan-i-toaletten-6781620 [retrieved on 2020-07-06]

## Description

### TECHNICAL FIELD

The invention relates to the field of purification of water from organic substances using enzymes.

### BACKGROUND ART

The pollution of water is a serious environmental problem. Today, the water treatment of sewage water, after use of mechanical filters, generally comprises use of activated sludge, comprising sedimentation of gross solids, followed by aerobic degradation of the organic matter and a subsequent sedimentation to remove the biomass. The water may thereafter go through a chemical treatment. However, certain pollutants like environmentally hazardous organic substances, such as for instance drug molecules, are not completely eliminated from the waters by conventional sedimentation techniques. In fact, very little drug molecules are eliminated by the sedimentation of sewage water. As a consequence, many environmentally hazardous organic substances remain in the water and have an environmentally negative impact, and in particular exert negative effects on aquatic life.

Periodic Report Summary 2 - ENDETECH (Enzymatic Decontamination Technology) (European Commission, CORDIS, Sejourne, Florence, 196264-N1) discusses an objective to develop technology which aims at eliminating persistent pharmaceutical pollutants from water using immobilized enzymes in a bioreactor. ENDETECH discloses immobilisation of enzymes on membranes and on beads.

WO 2009/076711 A1 discloses using polypeptides for degrading chlorinated s-triazines, which are pest control agents. Polypeptides with enhanced degradation ability, compared to AtzA are identified, expressed and brought into contact with for instance water, to eliminate the s-triazines present therein.

WO 2012/007536 A1 discloses methods using enzymes for inactivation of antibiotics in the environment, and in particular inactivating antibiotics from waste and waste water effluents before they reach the environment. The enzymes may be comprised in a composition that is applied to any effluent to be treated, or may be immobilized on a solid support, preferably silica or glass beads or a membrane.

None of the above mentioned methods are appropriate for an efficient large scale purification of water from environmentally hazardous organic substances.

The method of using bioreactors comprising enzymatic membranes for the purpose of water purification includes a passage of the water through the membrane, and consequently there may be substances in the water that do not pass through the membrane and thereby will remain on the upstream side of the membrane. This may have a negative effect on the efficiency of the enzymatic membrane, and consequently the efficiency of the bioreactor. Furthermore, the production of biomembranes can be costly.

The newspaper article "Läkemedel renas bort redan i toaletten" (https:// www.nyteknik.se/startup/lakemedel-renas-bort-redan-i-toaletten-6781620) describes the use of enzymes in a deposit that is designed to be used in a toilet bowl for biodegrading drugs. However, the article does not specify the enzymes used.

There is therefore a need to improve the purification methods in order to eliminate most of, if not all, environmentally hazardous organic substances present in the sewage water to a lower cost and with a larger efficiency.

### SUMMARY OF THE INVENTION

The present invention aims at improving the purification of toilet water by the use of enzymes. The advantage of using an enzymatic purification instead of a chemical purification is that the environmental footprint will be smaller. With chemical treatments, there is a need to safely handle the chemicals after use in a manner that is environmentally safe and follows regulatory protocol. Chemicals are not specific in their activity and can therefore exert other activities than the desired activity. If the chemicals enter the environment they will consequently have an effect on everything they will encounter. The advantage of using enzymes is that they are very specific in their activity, and with a time-limited period of activity. Thus any downstream problems, as above for chemicals, are minimized, which provides a substantial environmental advantage.

The present invention is aimed at solving the problem of improving the present water purification methods in order to eliminate most of, if not all, environmentally hazardous organic substances present in the toilet water to a lower cost and with a larger efficiency. This is attained by providing a deposit for a toilet comprising one or more enzymes having the ability to eliminate environmentally hazardous substances, wherein the deposit is designed to be attached to the toilet in such a way that it will release the one or more enzymes upon exposure to toilet flushing water, thereby allowing the one or more enzymes to enter the water in the toilet bowl and eliminate environmentally hazardous substances that are present in said toilet bowl.

According to one embodiment, the deposit is in the form of a toilet block suitable for being placed in a toilet bowl, and comprises a hydrophilic filling material, a hydrophobic releasing agent, a hydrophilic non-ionic surfactant, and one or more enzymes that may eliminate drug molecules.

The deposit according to the present invention may comprise one or more enzymes chosen from the group comprising of Epoxide hydrolase, Melamine Deaminase, Acetoacetate decarboxylase and Dehalogenase LinB.

Furthermore, the present invention provides for a use of a deposit according the above for purifying toilet water from one or more environmentally hazardous organic substances, such as drug molecules chosen from the group comprising antibiotics, anti-depressive agents, anti-inflammatory agents, hormones, anti-fungal agents, blood pressure agents, antineoplastic agents (anti-cancer), sedatives and painkillers.

Accordingly, the deposit according to the present invention comprises enzymes with an ability to eliminate one or more environmentally hazardous organic substances such as drug molecules chosen from the group comprising Citalopram, Fluconazole, Ibuprofen, Karbamazepin, Ketoconazol, Losartan, Metotrexat, Naproxen, Sertralin, Sulfametoxazol, Trimetroprim, Ketoprofen, Ofloxacine, and Norfloxacine.

Additionally, a method of purifying toilet water from one or more environmentally hazardous organic substances, such as drug molecules, is provided, comprising the steps of:
a) obtaining enzymes having the capacity to eliminate an environmentally hazardous organic substance;
b) comprising the enzymes obtained in step b) in a deposit designed to be attached to the a toilet, such that water flowing over the deposit releases the enzymes comprised therein;
c) using the deposit to enzymatically reduce and/or eliminate the one or more environmentally hazardous organic substances from toilet water.

According to one embodiment of the method above, step b) comprises the steps of
i) mixing the enzymes with starch in 1:4 relation and homogenizing through grinding;
ii) adding hydroxymethylcellulose to the mixture from step i) in a 1:1 relation;
iii) adding Magnesium Stearate 1:20 to the mixture from step ii);
iv) adding Tween-20 1:5 to the mixture from step iii) and thereafter homogenizing the mixture;
v) moulding the mixture from iv) into deposits in the form of toilet blocks.

Furthermore, the present invention provides for the method according to the above, wherein, in step c), the deposit is used in toilets to purify toilet water from one or more environmentally hazardous organic substances, such as drug molecules, comprising the step of placing the deposit in the toilet such that when the toilet flushes, the flushing water will release enzymes from the deposit and allow the enzymes to enter the water in the toilet bowl.

According to the present invention, in the method according to the above, the enzymes comprised in the deposit are one or more enzymes chosen from the group comprising of

Epoxide hydrolase, Melamine Deaminase, Acetoacetate decarboxylase and Dehalogenase LinB.

Further according to the present invention, in the method according to the above, the environmentally hazardous organic substances, such as drug molecules, are chosen from the group comprising antibiotics, anti-depressive agents, anti-inflammatory agents, hormones, anti-fungal agents, blood pressure agents, antineoplastic agents (anti-cancer), sedatives and painkillers.

More specifically, the environmentally hazardous organic substances are chosen from the group comprising of Citalopram, Fluconazole, Ibuprofen, Karbamazepin, Ketoconazol, Losartan, Metotrexat, Naproxen, Sertralin, Sulfametoxazol, Trimetroprim, Ketoprofen, Ofloxacine, and Norfloxacine.

### DETAILED DESCRIPTION

Environmentally hazardous organic substances are present in toilet water due to the utilisation thereof by our society. It relates particularly to drug molecules that are excreted by the users into the sewage water, via bodily fluids, faeces etc. The drug molecules of interest within the present application are molecules that have been identified to pose a threat to the environment and/or aquatic life, and that are difficult to eliminate from toilet water using present water treatment techniques.

With toilet water is meant blackwater which comprises the water used to flush toilets, combined with the human waste that it flushes away.

Within hospitals, there is a great need to improve the purification of water from the toilets used by patients utilizing medication. The presence of drug molecules in urine and faeces is substantial for these patients. Therefore there is an increased demand for the hospitals to improve the elimination of drug molecules from the toilet water, in order to lessen the strain on general water treatment plants. However, installation of larger water treatment systems and facilities is costly and constitutes a major engagement in the infrastructure of the hospitals.

The drug molecules of interest to be eliminated from sewage water are numerous and comprise for instance antibiotics, anti-depressive agents, anti-inflammatory agents, hormones, anti-fungal agents, blood pressure agents, antineoplastic agents (anti-cancer), sedatives, painkillers.

Antibiotics are of particular interest for elimination from sewage water as a part of the struggle to combat the development of antibiotic resistance. Examples of antibiotics that are of interest to be eliminated from sewage water are for instance Ciprofloxacin, Clarithromycin, Erythromycin, Sulfamethoxazole, Trimethoprim, Ofloxacin, Doxycycline, Norfloxacin and Tetracycline.

Examples of anti-depressive agents that are of interest to be eliminated from sewage water are for instance Citalopram, Sertraline, Fluoxetine and Venlafaxine.

Examples of anti-fungal agents that are of interest to be eliminated from sewage water are for instance Fluconazole and Ketoconazole.

Examples of anti-inflammatory agents that are of interest to be eliminated from sewage water are for instance Diclofenac, Ibuprofen, Naproxen, Ketoprofen and Methotrexate.

Examples of blood pressure agents that are of interest to be eliminated from sewage water are for instance Losartan and Metoprolol.

Examples of hormones that are of interest to be eliminated from sewage water are for instance Estradiol, Etinylestradiol and Levonorgestrel.

An example of painkillers that is of interest to be eliminated from sewage water is for instance Tramadol.

Examples of sedatives that are of interest to be eliminated from sewage water are for instance Zolpidem, Risperidone, Carbamazepine and Oxazepam.

According to the present invention, polynucleotides coding for enzymes able to eliminate the environmentally hazardous organic substances above are obtained. A criteria for said enzymes to be used for the invention is that they possess the ability to exert their activity during the following conditions:
1. within a temperature range of +8 °C - 20 °C;
2. within a pH range of 5,5 - 8,5; and
while maintaining an activity of at least 10³ s⁻¹M⁻¹(k_{cat}/Kₘ).

### Enzymes

One or more polynucleotides are provided, encoding one or more enzymes having the capacity to eliminate an environmentally hazardous organic substance. This is done by a method comprising identification, selection and modification of enzymes that may be used to eliminate environmentally hazardous organic substance.

In order to screen an enzyme library in search for a suitable enzyme to be used in the elimination of an environmentally hazardous organic substance, the chemical structures involved in biological activity for the environmentally hazardous organic substances are identified. Then a database for enzyme activity is searched through for identifying enzymes with activity against similar structures as those chemical structures that have been identified to be involved in the biological activity above. Examples of databases to be used for such a search are for instance ExPaSy or BRENDA.

In a first step in the identification of an enzyme, the chemical functional groups that are essential for the biological activity of the environmentally hazardous organic substance, such as alcohols, carboxyl acids, esters, halogens etc. are identified. In a second step, the type of enzymes that are able to digest such a chemical functional group is identified. It relates to digestion of -OH, -COOH, -C-O-C, etc. In a third step, the carbon backbone structure of the environmentally hazardous organic substance is compared to the carbon backbone structure of the substrates that are or known to be digested by the enzyme. This is to ensure that the environmentally hazardous organic substance may be able to fit into the binding site of the enzyme, and that instance no sterical hindrance exists.

Once identified, the enzymes are acquired for further testing of their activity against the correlating environmentally hazardous organic substance. The enzymes may be purchased in a produced, purified form. The enzyme may also be purchased as a polynucleotide in a plasmid or a vector, which will facilitate the mutagenesis of the polynucleotide and allows for a choice of expression system or expression organism. It is also possible to acquire the organism originally producing the enzyme, for in-house sequencing and subsequent expression in any expression system. There are a great number of commercial channels through which enzymes, polynucleotides encoding the enzymes, or organisms producing the enzymes may be purchased, which are known to the person skilled in the art.

Enzymes that show an activity against the environmentally hazardous organic substance are selected to be used in the method according to the present invention. For an enzyme to show an activity against the environmentally hazardous organic substance, and thus having a capacity to eliminate said environmentally hazardous organic substance, said enzyme needs to digest the environmentally hazardous organic substance at the functional chemical groups identified according to the above. The presence of a substrate after reaction of the substrate with an enzyme is usually detected by means of mass spectrometry. However, any other means known to the skilled person for this purpose may also be used. In order to determine if an enzyme is eligible for the method according to the invention, an elimination capacity is thus determined. This elimination capacity is determined by measuring the degree of elimination of the substrate at a concentration of 1U enzyme, in relation to the substrate, and 100 µmol of environmentally hazardous organic substance, after 1 hour of reaction within a temperature range of +8 °C - 20 °C and within a pH range of 5,5 - 8,5. A reduction of 15% of the environmentally hazardous organic substance, and thus an elimination capacity of 15%, must be observed for the enzyme to be selected for the method according to the present invention.

The aim of the method according to the present invention is to provide selected enzymes that possess, or are modified through mutagenesis to possess, the ability to exert their activity against the environmentally hazardous organic substances during the following conditions:
within a temperature range of +8 °C - 20 °C;
within a pH range of 5.5 - 8.5;
   with an activity of at least 10³ s⁻¹M⁻¹(k_{cat}/Kₘ).

Thus all three criteria of temperature, pH and enzymatic activity according to the above must be fulfilled. These are the preset criteria that must be met by an enzyme in order to be able to be used against the environmentally hazardous organic substances.

An enzyme that shows an activity, and thus an elimination capacity of at least 15 %,against the correlating environmentally hazardous organic substance, but do not initially fulfil all of the three above mentioned criteria, will be subject to a mutagenesis process comprising the following steps:
1. The original gene for the identified enzyme is acquired through DNA synthesis, or by PCR starting from the origin species.
2. The enzyme gene then go through a mutagenesis for obtaining new mutated enzyme genes that may fulfil the above specified criteria
3. The mutated enzyme genes are transformed into an E. coli host with vector DNA containing the mutated enzyme gene.
4. An appropriate aliquot of E.coli host cells is spread on LB (Lysogeny broth)-plate containing a suitable antibiotic to obtain well-isolated colonies and thus create a mutation library.
5. Single colonies of host cells are picked and inoculated into LB media in a 96-well plate and stored overnight in 30°C.
6. Aliquots of host cells culture are transferred into a new 96 well plate containing TB (Terrific broth) and inducer agent and cultivated over night at 30°C
7. The host cells are centrifuged down and resuspended in buffer containing Lysozyme and DNase and centrifuged down again to obtain a supernatant comprising any enzyme produced.
8. The supernatant from step 7 is used for testing enzyme activity against the correlating environmentally hazardous organic substance within the criteria specified above,
9. Best performing mutations are selected and restarted from step 2 until all three criteria have been fulfilled.

All of the material and reagents used in the method according to the invention are within common knowledge within the technical field, and may be obtained from commercial channels.

DNA syntheses or PCR processes as performed in step 1 are part of the common general knowledge within the field, and the person skilled in the art will be readily able to perform any of the methods currently used within the field.

The mutagenesis used in step 2 may be any methods disclosed in Salazar, O. et. al., Evaluating a Screen and Analysis of Mutant Libraries, Methods in Molecular Biology, vol. 230: Directed Enzyme Evolution: Screening and Selection Methods*.* The skilled person is able to readily make use of the methods disclosed therein for the purpose of the mutagenesis according to the invention.

In step 3, the transformation of the E. coli with the vector comprising a mutated strain gene for the enzyme can be done according to any transformation commonly used within the field, and can be chosen from for instance electroporation, gene gun technique, agitation with glass beads, ultrasound and shock waves.

An enzyme that, after mutagenesis and subsequent testing according to the above, do not fulfil the requirement of meeting the criteria of temperature, pH and enzymatic activity against the substrate, may be subject to further mutagenesis until the requirement is fulfilled.

An enzyme that in the initial screening is shown to already have an activity of at least 10³ s⁻¹M⁻¹(k_{cat/}Kₘ) at the specified temperature and pH intervals, does not need to be subjected to the mutagenesis and can be directly used for the purpose of eliminating environmentally hazardous organic substances from water within water treatment plants or systems.

The following table lists enzymes used in the present invention, identified and/or modified according to the above, as well as the environmentally hazardous organic substances that are eliminated by the use of said enzymes within the present invention.

**Table 1.**

| **Enzyme** | **Origin species** | **Activity against following compounds** |
|---|---|---|
| Laccase (not according to the invention) | Trametes Ochracea | Diclofenac, Estradiol, Ciprofloxacin, Doxycycline, Levonorgestrel, Oxazepam |
| Lignin Peroxidase (not according to the invention) | Trametes Vesicolorum | Metoprolol, Propranolol, Clarithromycin, Trimethoprim |
| Epoxide hydrolase | Rhodococcus Rhodochrous | Carbamazepine, Trimethoprim |
| P450 BM3 (not according to the invention) | E. coli DE10 | Metoprolol, Propranolol |
| Melamine Deaminase | | Sertraline, Sulfamethoxazole, Trimethoprim |
| Acetoacetate decarboxylase | Human | Ibuprofen, Metotrexat, Naproxen, Ketoprofen, Ofloxacin |
| Dehalogenase LinB | Sphingobium japonicum | Citalopram, Flukonazol, Ketoconazol, Losartan, Norfloxacin |

### Production of enzymes

Polynucleotides encoding one or more enzymes that fulfil the criteria above, and identified and modified according to the above, are placed in a vector plasmid comprising an extra-cellular signal peptide using conventional genetic engineering techniques within the art.

The vector plasmids carrying one or more polynucleotides encoding one or more enzymes that fulfil the criteria of activity above are transformed into a production host. The methods of transformation of the production host are common to the person skilled in the art and may for instance be electroporation, gene gun technique, agitation with glass beads, ultrasound and shock waves. The production host must have ability for extra-cellular transport of the enzyme produced from the polynucleotide transformed above. Such a production host may be for instance E.coli, Bacillus Subtilis or Yeast.

A signal peptide is a short peptide present in an N-terminus of a protein, such as an enzyme, rendering the protein destined towards a specific secretory pathway in a cell. The signal peptide may direct, or translocate, the protein to a specific compartment of the cell. It may also direct the protein to the cell membrane for transport through channels within the cell membrane, such that the protein is transported to the exterior of the cell. Thus an extra-cellular transport of the protein is achieved.

In order for the produced enzyme according to the present invention to be transported to the outside of the host cell, the polynucleotide must be coupled to a signal peptide responsible for directing the extra-cellular transport of the enzyme in a correct manner. There are a large amount of signal peptides known to the person skilled in the art that may be used to direct the transport to the outside of the cell. The skilled person will thus be able to choose an appropriate signal peptide dependent on which enzyme that is to be produced, as well as the vector plasmid and the host cell used for the production, in order to ensure an extra-cellular transport or translocation.

It is also possible to produce the enzymes in a cell-free expression system. In such a case, the polynucleotide is provided in a vector suitable for expression of the polynucleotide in such a system.

Regardless of the system used for enzyme production, the culture or reaction supernatant will comprise the enzymes produced. According to the present invention, said supernatant is freeze -dried or lyophilized to obtain the enzymes present therein in a powder form that may be used below. Methods of freeze-drying or lyophilisation of enzymes are well-known to the skilled person.

### Deposit of enzymes for placement in a toilet

According to the present invention, the one or more enzymes produced and prepared according to the above are comprised in a composition, or deposit, designed to be attached to a toilet. The deposit must be attached to the toilet such that the deposit is brought into contact with toilet flushing water upon flushing the toilet, and releases the one or more enzymes upon exposure to toilet flushing water, thereby allowing the one or more enzymes to enter the water in the toilet bowl and eliminate environmentally hazardous substances that are present in said toilet bowl.

By adding the enzymes to a deposit to be placed in a toilet, enzymes are released into the toilet water every time the toilet is flushed and water flows over the deposit. Thus, enzymes are available in the toilet water and may start to eliminate any environmentally hazardous drug molecules from the urine of the user immediately. The deposit is thus particularly useful when placed in toilets of hospitals where the patients often are the subject of treatments and medication with a variety of drug molecules. Upon the systemic administration of drug molecules, a significant amount of the treatment is often not taken up by the body and thus secreted with the urine, or the faeces. Thus, the concentration of drug molecules in the sewage water of hospitals is particularly high, posing an environmental problem.

By the use of the deposits for toilets above, the elimination of the environmentally hazardous drug molecules starts immediately in the toilet after urination, and thus the sewage water exiting the hospital will have less environmentally hazardous drug molecules present therein, whereby the burden on the general water treatment plants is lessened.

With "designed to be attached" is meant that the deposit for instance may be attached directly to the toilet without any casing as long as the composition attaches to an inner wall of the toilet at a location where the deposit will remain attached, while flushing water comes into contact with the deposit and thereby releases one or more enzymes present in the deposit. The deposit may then be in the form of for instance a gel or a resin.

With "designed to be attached" is also meant that the deposit may be comprised or encased in an insert, cartridge, housing, casing, or any other form of container suitable to be placed in a toilet where it comes in contact with flushing water. Such containers are well known in the art and the skilled person will be able to choose a suitable container for this purpose.

The deposit may be placed anywhere in the toilet water as long as it is brought into contact with the toilet flushing water upon flushing the toilet, such that that the composition will release the one or more enzymes upon exposure to toilet flushing water. The deposit may therefore be placed for instance in the water reservoir, or in the toilet bowl. It may be placed directly on a surface of the toilet, or may be attached by a suspension means for hanging the deposit for instance on the upper edge of the toilet bowl. When using a suspension means, it is important to ensure that the deposit hangs low enough for the toilet flushing water to come in contact with the deposit.

A common device for placing a deposit in a toilet is a toilet block. It normally relates to deposits comprising perfumes, preservatives, surfactants and coloring agents, comprised within a plastic container with openings or perforations allowing the flushing water to come in contact with the deposit such that the contents in the deposit are released. Toilet blocks are normally used to provide a pleasant odor or hide unpleasant odor, as well as to sanitize the toilet. Toilet blocks may therefore further comprise agents intended to inhibit limescale or waste deposits in the toilet.

As an example of deposits without a casing, there are so called discs that are deposited directly on the toilet bowl surface without any container. These discs normally comprise cleansers, emulsifiers, stabilizers, fragrances and coloring agents, and are used for the same purpose as the toilet block above.

### Composition for a toilet block

According to a preferred embodiment of the present invention, a composition for a toilet block is provided, comprising 60-75%, preferably 70% hydrophilic filling material, 3-5 % hydrophobic releasing agent, 15-17 % hydrophilic non-ionic surfactant, and 5-20%, preferably 10% enzymes.

The filling material may be chosen from for instance starch and hydroxymethylcellulose. Preferably the toilet block comprises 40 % starch and 30 % hydroxymethylcellulose. The hydroxymethylcellulose gives the toilet block a gelling surface.

The hydrophobic releasing agent optimizes release volume for the toilet block, and may for instance be magnesium stearate.

The hydrophilic non-ionic surfactant acts to bind the materials together and is preferably Tween-20.

The enzymes are the active compound(s) in the composition for a toilet block, and can consist of several different enzymes. They are selected from the table 1 above, and at least one enzyme in the table 1 is comprised in the composition for a toilet block. Preferably all enzymes are present in the composition for a toilet block.

### Manufacturing of toilet block

Enzymes are produced according to the method above. The produced enzymes can be formulated into a composition for toilet blocks by the following process.
1. Lyophilized or freeze-dried enzymes are mixed with starch in 1:4 relation and homogenized through grinding;
2. Hydroxymethylcellulose is added to the above mixture in a 1:1 relation;
3. Magnesium Stearate 1:20 is added to the above;
4. Tween-20 1:5 is added to the above and the mixture homogenized;
5. The homogenized mixture from step 4) is moulded into toilet blocks.

The toilet blocks are contained in a plastic housing, normally designed to be suspended on an upper edge of a toilet bowl, hanging down from the edge enough to ensure that toilet flushing water will come in contact with the composition within the plastic housing, whereby enzymes are released from the composition therein, and will reach the toilet bowl.

## Claims

1. A deposit for a toilet for purifying toilet water from one or more environmentally hazardous organic substances, such as drug molecules, comprising one or more enzymes having the ability to eliminate said environmentally hazardous substances, wherein the deposit is designed to be attached to the toilet in such a way that it will release the one or more enzymes upon exposure to toilet flushing water, thereby allowing the one or more enzymes to enter the water in the toilet bowl and eliminate environmentally hazardous substances that are present in said toilet bowl, **characterized in that** the one or more enzymes are chosen from the group comprising of Epoxide hydrolase, Melamine Deaminase, Acetoacetate decarboxylase and Dehalogenase LinB.

2. The deposit according to claim 1, wherein the deposit is in the form of a toilet block suitable for being placed in a toilet bowl, and comprises a hydrophilic filling material, a hydrophobic releasing agent, a hydrophilic non-ionic surfactant, and one or more enzymes that may eliminate environmentally hazardous organic substances, such as drug molecules.

3. The deposit according to claim 2, wherein the deposit comprises 60-75%, preferably 70% hydrophilic filling material, 3-5 % hydrophobic releasing agent, 15-17 % hydrophilic non-ionic surfactant, and 5-20%, preferably 10% enzymes.

4. The deposit according to any of the claims 2-3, wherein (a) the hydrophilic filling material is chosen from starch and/or hydroxymethylcellulose, and/or (b) the hydrophobic releasing agent is magnesium stearate.

5. The deposit according to any of the claims 2-4, wherein the hydrophilic non-ionic surfactant is Tween-20.

6. The deposit according to any of claims 1-5, wherein the environmentally hazardous organic substances are drug molecules chosen from the group comprising of Citalopram, Fluconazole, Ibuprofen, Karbamazepin, Ketoconazol, Losartan, Metotrexat, Naproxen, Sertralin, Sulfametoxazol, Trimetroprim, Ketoprofen, Ofloxacine, and Norfloxacine.

7. Use of a deposit according to any of claims 1-6, for purifying toilet water from one or more environmentally hazardous organic substances, such as drug molecules chosen from the group comprising antibiotics, anti-depressive agents, anti-inflammatory agents, hormones, anti-fungal agents, blood pressure agents, antineoplastic agents (anti-cancer), sedatives and painkillers.

8. A method of purifying toilet water from one or more environmentally hazardous organic substances, such as drug molecules, chosen from the group comprising antibiotics, anti-depressive agents, anti-inflammatory agents, hormones, anti-fungal agents, blood pressure agents, antineoplastic agents (anti-cancer), sedatives and painkillers, comprising the steps of:
a) obtaining one or more enzymes having the capacity to eliminate one or more environmentally hazardous organic substances;
b) comprising the one or more enzymes obtained in step a) in a deposit designed to be attached to a toilet, such that flushing water flowing over the deposit releases the one or more enzymes comprised therein;
c) using the deposit to enzymatically reduce and/or eliminate the one or more environmentally hazardous organic substances from the toilet water,
**characterized in that** the one or more enzymes are chosen from the group comprising of, Epoxide hydrolase, Melamine Deaminase, Acetoacetate decarboxylase and Dehalogenase LinB.

9. The method according to claim 8, wherein step a) comprises the following steps
a1) providing one or more polynucleotide(s) encoding one or more enzymes having the capacity to eliminate an environmentally hazardous organic substance;
a2) producing the enzymes recombinantly in an organism transformed with a vector, such as a plasmid, comprising the polynucleotide from a), wherein the enzyme is produced by said organism, thereby obtaining said enzyme.

10. The method according to claim 9, wherein the vector comprises a signal peptide coupled to the polynucleotide coding for the enzyme, and wherein the signal peptide directs an extracellular transport of the produced enzyme.

11. The method according to any of claims 8-10, wherein the enzyme is recombinantly produced by an organism capable of extracellular production of the enzyme, so that the enzyme is transported by the organism to a supernatant in a culture of said organism, such as E. coli, a Bacillus species or yeast.

12. The method according to any of claims 8-11, wherein the supernatant comprising the enzymes is freeze-dried or lyophilized.

13. The method according to any of claims 8-12, **characterised in that** step b) comprises the steps of
i) mixing the enzymes with starch in 1:4 relation and homogenizing through grinding;
ii) adding hydroxymethylcellulose to the mixture from step i) in a 1:1 relation;
iii) adding Magnesium Stearate 1:20 to the mixture from step ii);
iv) adding Tween-20 1:5 to the mixture from step iii) and thereafter homogenizing the mixture;
v) moulding the mixture from iv) into deposits in the form of toilet blocks.

14. The method according to any of claims 8-13, **characterized in that** in step c) the deposit is used in toilets to purify toilet water from one or more environmentally hazardous organic substances, such as drug molecules, comprising the step of placing the deposit in the toilet such that when the toilet flushes, the flushing water will release enzymes from the deposit and allow the enzymes to enter the water in the toilet bowl.

15. The method according to any of the claims 8-14, wherein the environmentally hazardous organic substances are drug molecules chosen from the group comprising of Citalopram, Fluconazole, Ibuprofen, Karbamazepin, Ketoconazol, Losartan, Metotrexat, Naproxen, Sertralin, Sulfametoxazol, Trimetroprim, Ketoprofen, Ofloxacine, and Norfloxacine.

## Patentansprüche

1. Ablagerung für eine Toilette zur Reinigung von Toilettenspülwasser von umweltgefährdenden organischen Stoffen, wie beispielsweise Wirkstoffmolekülen, umfassend ein oder mehrere Enzym(e) mit der Fähigkeit, die umweltgefährdenden Stoffe zu beseitigen, wobei die Ablagerung zur Befestigung an der Toilette in einer solchen Weise ausgelegt ist, dass sie bei Exposition gegenüber Toilettenspülwasser das eine oder die mehreren Enzym(e) freigeben wird, wodurch dem einen oder den mehreren Enzym(en) ermöglicht wird, in das Wasser im Toilettenbecken zu gelangen und in dem Toilettenbecken vorhandene umweltgefährdende Stoffe zu beseitigen, **dadurch gekennzeichnet, dass** das eine oder die mehreren Enzym(e) aus der Gruppe bestehend aus Epoxidhydrolase, Melamindeaminase, Acetoacetatdecarboxylase und Dehalogenase LinB ausgewählt ist bzw. sind.

2. Ablagerung nach Anspruch 1, wobei die Ablagerung in Form eines Toilettenblocks vorliegt, der zum Anordnen in einem Toilettenbecken geeignet ist und einen hydrophilen Füllstoff, ein hydrophobes Trennmittel, ein hydrophiles nichtionisches Tensid und ein oder mehrere Enzym(e) umfasst, das bzw. die umweltgefährdende organische Stoffe, wie beispielsweise Wirkstoffmoleküle, beseitigen kann bzw. können.

3. Ablagerung nach Anspruch 2, wobei die Ablagerung 60-75 %, vorzugsweise 70 %, hydrophilen Füllstoffes, 3-5 % hydrophoben Trennmittels, 15-17 % hydrophilen nichtionischen Tensids und 5-20 %, vorzugsweise 10 %, Enzyme umfasst.

4. Ablagerung nach einem der Ansprüche 2-3, wobei (a) der hydrophile Füllstoff aus Stärke und/oder Hydroxymethylcellulose ausgewählt ist, und/oder (b) das hydrophobe Trennmittel Magnesiumstearat ist.

5. Ablagerung nach einem der Ansprüche 2-4, wobei das hydrophile nichtionische Tensid Tween-20 ist.

6. Ablagerung nach einem der Ansprüche 1-5, wobei die umweltgefährdenden organischen Stoffe Wirkstoffmoleküle sind, die aus der Gruppe umfassend Citalopram, Fluconazol, Ibuprofen, Karbamazepin, Ketoconazol, Losartan, Metotrexat, Naproxen, Sertralin, Sulfametoxazol, Trimetroprim, Ketoprofen, Ofloxacin und Norfloxacin ausgewählt sind.

7. Verwendung einer Ablagerung nach einem der Ansprüche 1-6, zur Reinigung von Toilettenspülwasser von einem oder mehreren umweltgefährdenden organischen Stoff(en), wie beispielsweise Wirkstoffmolekülen ausgewählt aus der Gruppe umfassend Antibiotika, antidepressive Mittel, antiinflammatorische Mittel, Hormone, Antimykotika, Blutdrucksenker, antineoplastische Mittel (Antikrebsmittel), Beruhigungsmittel und Schmerzmittel.

8. Verfahren zur Reinigung von Toilettenspülwasser von einem oder mehreren umweltgefährdenden organischen Stoff(en), wie beispielsweise Wirkstoffmolekülen, ausgewählt aus der Gruppe umfassend Antibiotika, antidepressive Mittel, antiinflammatorische Mittel, Hormone, Antimykotika, Blutdrucksenker, antineoplastische Mittel (Antikrebsmittel), Beruhigungsmittel und Schmerzmittel, umfassend die folgenden Schritte:
a) Erhalten von einem oder mehreren Enzym(en) mit der Fähigkeit, einen oder mehrere umweltgefährdende(n) organische(n) Stoff(e) zu beseitigen;
b) Einschließen des einen oder der mehreren im Schritt a) erhaltenen Enzyms bzw. Enzyme in einer Ablagerung, der zur Befestigung an einer Toilette ausgelegt ist, so dass Spülwasser, das über die Ablagerung strömt, das eine oder die mehreren darin enthaltene(n) Enzym(e) freigibt;
c) Verwendung der Ablagerung zur enzymatischen Reduzierung und/oder Beseitigung des einen oder der mehreren umweltgefährdenden Stoffe(s) von dem Toilettenspülwasser,
**dadurch gekennzeichnet, dass** das eine oder die mehreren Enzym(e) aus der Gruppe umfassend Epoxidhydrolase, Melamindeaminase, Acetoacetatdecarboxylase und Dehalogenase LinB ausgewählt ist bzw. sind.

9. Verfahren nach Anspruch 8, wobei der Schritt a) die folgenden Schritte umfasst:
a1) Bereitstellen von einem oder mehreren Polynukleotid(en), das bzw. die ein oder mehrere Enzym(e) mit der Fähigkeit, einen oder mehrere umweltgefährdende(n) organischen Stoff(e) zu beseitigen, kodiert bzw. kodieren;
a2) rekombinantes Erzeugen der Enzyme in einem Organismus, der mit einem Vektor, wie beispielsweise einem Plasmid, transformiert ist, umfassend das Polynukleotid aus a), wobei das Enzym durch den Organismus hergestellt ist, wodurch das Enzym erhalten wird.

10. Verfahren nach Anspruch 9, wobei der Vektor ein Signalpeptid umfasst, das an das Polynukleotid, das das Enzym kodiert, angekoppelt ist, und wobei das Signalpeptid einen extrazellulären Transport des hergestellten Enzyms steuert.

11. Verfahren nach einem der Ansprüche 8-10, wobei das Enzym durch einen Organismus rekombinant hergestellt wird, der zur extrazellulären Herstellung des Enzyms fähig ist, so dass das Enzym durch den Organismus zu einem Überstand in einer Kultur des Organismus, wie beispielsweise E. Coli, einer Bacillus-Art oder Hefe, transportiert wird.

12. Verfahren nach einem der Ansprüche 8-11, wobei der Überstand, der die Enzyme umfasst, gefriergetrocknet oder lyophilisiert ist.

13. Verfahren nach einem der Ansprüche 8-12, **dadurch gekennzeichnet, dass** der Schritt b) die folgenden Schritte umfasst:
i) Mischen der Enzyme mit Stärke in einem Verhältnis 1:4 und Homogenisieren durch Zerkleinern;
ii) Zugabe von Hydroxymethylcellulose zur Mischung aus dem Schritt i) in einem Verhältnis 1:1;
iii) Zugabe von Magnesiumstearat 1:20 zur Mischung aus dem Schritt ii);
iv) Zugabe von Tween-20 1:5 zur Mischung aus dem Schritt iii) und danach Homogenisieren der Mischung;
v) Gießen der Mischung aus iv) zu Ablagerungen in Form von Toilettenblöcken.

14. Verfahren nach einem der Ansprüche 8-13, **dadurch gekennzeichnet, dass** im Schritt c) die Ablagerung in Toiletten verwendet wird, um Toilettenspülwasser von einem oder mehreren umweltgefährdenden organischen Stoff(en), wie beispielsweise Wirkstoffmolekülen, verwendet wird, umfassend den Schritt des Platzierens der Ablagerung in der Toilette derart, dass, wenn die Toilette gespült wird, das Spülwasser Enzyme aus der Ablagerung freigeben und den Enzymen ermöglichen wird, in das Wasser in dem Toilettenbecken zu gelangen.

15. Verfahren nach einem der Ansprüche 8-14, wobei die umweltgefährdenden organischen Stoffe Wirkstoffmoleküle sind, die aus der Gruppe umfassend Citalopram, Fluconazol, Ibuprofen, Karbamazepin, Ketoconazol, Losartan, Metotrexat, Naproxen, Sertralin, Sulfametoxazol, Trimetroprim, Ketoprofen, Ofloxacin und Norfloxacin ausgewählt sind.

## Revendications

1. Dépôt pour toilettes destiné à purifier l'eau de toilettes d'une ou plusieurs substances organiques dangereuses pour l'environnement, telles que des molécules médicamenteuses, comprenant une ou plusieurs enzymes ayant la capacité d'éliminer lesdites substances dangereuses pour l'environnement, dans lequel le dépôt est conçu pour être fixé aux toilettes de telle sorte qu'il libère la ou les enzymes lors de l'exposition à l'eau de la chasse d'eau, permettant ainsi à la ou aux enzymes de pénétrer dans l'eau de la cuvette de toilettes et d'éliminer les substances dangereuses pour l'environnement qui sont présentes dans ladite cuvette de toilettes, **caractérisé en ce que** la ou les enzymes sont choisies dans le groupe comprenant l'époxyde hydrolase, la mélamine désaminase, l'acétoacétate décarboxylase et la déhalogénase LinB.

2. Dépôt selon la revendication 1, dans lequel le dépôt se présente sous la forme d'un bloc sanitaire apte à être placé dans une cuvette de toilettes, et comprend un matériau de remplissage hydrophile, un agent de libération hydrophobe, un tensioactif non ionique hydrophile, et un ou plusieurs enzymes qui peuvent éliminer les substances organiques dangereuses pour l'environnement, telles que les molécules de médicaments.

3. Dépôt selon la revendication 2, dans lequel le dépôt comprend 60 à 75%, de préférence 70% de matériau de remplissage hydrophile, 3 à 5% d'agent de libération hydrophobe, 15 à 17% de tensioactif non ionique hydrophile, et 5 à 20%, de préférence 10% enzymes.

4. Dépôt selon l'une quelconque des revendications 2 à 3, dans lequel (a) le matériau de remplissage hydrophile est choisi parmi l'amidon et / ou l'hydroxyméthylcellulose, et / ou (b) l'agent de libération hydrophobe est le stéarate de magnésium.

5. Dépôt selon l'une quelconque des revendications 2 à 4, dans lequel le tensioactif non ionique hydrophile est le Tween-20.

6. Dépôt selon l'une quelconque des revendications 1 à 5, dans lequel les substances organiques dangereuses pour l'environnement sont des molécules de médicament choisies dans le groupe comprenant du Citalopram, du Fluconazole, de l'Ibuprofène, du Karbamazepin, du Kétoconazol, du Losartan, du Métonaltrexat, du Naproxène, de la Sertraline, du Sulfamtoxazol, du Trimétropolim, du Kétoprofène, de l'Ofloxacine et de la Norfloxacine.

7. Utilisation d'un dépôt selon l'une quelconque des revendications 1 à 6, pour purifier l'eau de toilettes à partir d'une ou de plusieurs substances organiques dangereuses pour l'environnement, telles que des molécules de médicament choisies dans le groupe comprenant des antibiotiques, des agents anti-dépressifs, des agents anti-inflammatoires, des hormones, des agents antifongiques, des agents de pression sanguine, des agents antinéoplasiques (anticancéreux), des sédatifs et des calmants.

8. Procédé pour purifier l'eau de toilettes à partir d'une ou de plusieurs substances organiques dangereuses pour l'environnement, telles que des molécules de médicament choisies dans le groupe comprenant des antibiotiques, des agents anti-dépressifs, des agents anti-inflammatoires, des hormones, des agents antifongiques, des agents de pression sanguine, des agents antinéoplasiques (anticancéreux), des sédatifs et des calmants, comprenant les étapes consistant à :
a) obtenir une ou plusieurs enzymes ayant la capacité d'éliminer une ou plusieurs substances organiques dangereuses pour l'environnement ;
b) comprendre la ou les enzymes obtenues à l'étape a) dans un dépôt conçu pour être fixé à des toilettes, de telle sorte que l'eau de rinçage s'écoulant sur le dépôt libère la ou les enzymes comprises dans celle-ci ;
c) utiliser le dépôt pour réduire et / ou éliminer par voie enzymatique la ou les substances organiques dangereuses pour l'environnement à partir de l'eau de toilettes,
**caractérisé en ce que** la ou les enzymes sont choisies dans le groupe comprenant l'époxyde hydrolase, la mélamine désaminase, l'acétoacétate décarboxylase et la déshalogénase LinB.

9. Procédé selon la revendication 8, dans lequel l'étape a) comprend les étapes suivantes de
a1) la fourniture d'un ou de plusieurs polynucléotides codant une ou plusieurs enzymes ayant la capacité d'éliminer une substance organique dangereuse pour l'environnement ;
a2) la production des enzymes par recombinaison dans un organisme transformé avec un vecteur, tel qu'un plasmide, comprenant le polynucléotide provenant de l'étape a), l'enzyme étant produite par ledit organisme, ce qui permet d'obtenir ladite enzyme.

10. Procédé selon la revendication 9, dans lequel le vecteur comprend un peptide signal couplé au polynucléotide codant pour l'enzyme, et dans lequel le peptide signal dirige un transport extracellulaire de l'enzyme produite.

11. Procédé selon l'une quelconque des revendications 8 à 10, dans lequel l'enzyme est produite par recombinaison par un organisme capable de la production extracellulaire de l'enzyme, si bien que l'enzyme est transportée par l'organisme vers un surnageant dans une culture dudit organisme, tel que l'E coli, une espèce Bacillus ou une levure.

12. Procédé selon l'une quelconque des revendications 8 à 11, dans lequel le surnageant comprenant les enzymes est séché à froid ou lyophilisé.

13. Procédé selon l'une quelconque des revendications 8 à 12, **caractérisé en ce que** l'étape b) comprend les étapes consistant à
i) mélanger les enzymes avec de l'amidon en relation 1 : 4 et homogénéisation par broyage ;
ii) ajouter de l'hydroxyméthylcellulose au mélange issu de l'étape i) dans une relation 1 : 1 ;
iii) ajouter du stéarate de magnésium 1 : 20 au mélange issu de l'étape ii) ;
iv) ajouter le Tween-20 1 : 5 au mélange issu de l'étape iii) puis homogénéisation du mélange ;
v) mouler le mélange issu de l'étape iv) en dépôts dans la forme de blocs de toilettes.

14. Procédé selon l'une quelconque des revendications 8 à 13, **caractérisé en ce que** dans l'étape c), le dépôt est utilisé dans des toilettes pour purifier l'eau de toilettes à partir d'une ou de plusieurs substances organiques dangereuses pour l'environnement, telles que des molécules de médicament, comprenant l'étape consistant à placer le dépôt dans les toilettes de telle sorte que, lorsque les toilettes sont rincées, l'eau de rinçage libère des enzymes du dépôt et permettre aux enzymes d'entrer dans l'eau dans la cuvette de toilettes.

15. Procédé selon l'une quelconque des revendications 8 à 14, dans lequel les substances organiques dangereuses pour l'environnement sont des molécules de médicament choisies dans le groupe comprenant du Citalopram, du Fluconazole, de l'Ibuprofène, du Karbamazepin, du Kétoconazol, du Losartan, du Métonaltrexat, du Naproxène, de la Sertraline, du Sulfamtoxazol, du Trimé-tropolim, du Kétoprofène, de l'Ofloxacine et de la Norfloxacine.
